# EUROPÄISCHE PATENTANMELDUNG

(11) **EP 1 217 230 A2**
(43) Veröffentlichungstag der Anmeldung: **26.06.2002**
(21) Anmeldenummer: 01129783.5
(22) Anmeldetag: 14.12.2001
(51) Int. Cl.: F16B 37/08

(54) **Schnellbefestigungsmutter**

(30) Priorität: 21.12.2000 DE 10064375
(71) Anmelder: SW Stanzwerk Glarus AG, 8750 Glarus (CH)
(72) Erfinder: Hagemann, Ludbert, 91608 Geslau (DE); Emmert, Jochen, 91610 Insingen (DE)
(74) Vertreter: Erb, Henning, Dipl.-Ing.

(57) **Zusammenfassung**

Eine Schnellbefestigungsmutter besitzt eine Öffnung (20) mit von einem Tragteil (14) ausgestellten Rastklinken (22). Beim Einschieben eines Gewindeschaftes (18) weichen diese elastisch aus und verklemmen sich bei einer entgegengesetzten Zugbelastung des Gewindeschaftes (18) gegen dessen Gewindegänge. Zur Verbesserung der möglichen Spannkräfte in der Schraubverbindung wird vorgeschlagen, wenigstens im Bereich der Rastklinken (22) den Abstand zwischen der Wandung (28) und dem Gewindeaußendurchmesser des Gewindeschaftes (18) unter die Materialstärke der Rastklinke (22) zu verkleinern. Die gesteigerte Knickstabilität der einzelnen Rastklinken erlaubt höhere Anzugsmomente des Gewindeschaftes und damit höhere Spannkräfte in der Schraubverbindung.

## Beschreibung

Die Erfindung befaßt sich mit einer Schnellbefestigungsmutter mit einer Öffnung mit von einem Tragteil ausgestellten Rastklinken, die beim Einschieben eines Gewindeschaftes in die Öffnung elastisch in eine Richtung von dem Gewinde weg ausweichen und sich bei entgegengerichteter Zugbelastung des Gewindeschaftes gegen dessen Gewindegänge verklemmen.

Derartige Schnellbefestigungsmuttern bieten den Vorteil, daß der Gewindeschaft beispielsweise einer Schraube, einer Gewindestange oder eines Gewindestiftes nicht über seine gesamte Länge in die Mutter eingedreht zu werden braucht, sondern schnell und einfach in eine Vormontagestellung axial in die Mutter eingedrückt werden kann und erst abschließend durch Drehen um einen vergleichsweise kleinen Drehwinkel in seine endgültig angezogene Position gebracht wird.

Beispielsweise ist bereits ein Schnellbefestigungselement der eingangs beschriebenen Art aus der WO 99/08007 bekannt. Das dort beschriebene Befestigungselement besteht aus einem inneren Einsatzstück aus Blech, das den einzuschiebenden Gewindeschaft vollständig umschließt und an welchem eine Vielzahl von Gewindekrallen ausgeformt sind. Das Einsatzstück wird axial in ein Gehäuse mit entsprechender Innenkontur geschoben.

Nachteilig bei den bisherigen Ausführungsformen ist, daß die federnden Rastelemente nur einem sehr geringen Drehmoment widerstehen können, bevor sie durch die Steigung des Gewindebolzens aus dem Gewindegang gedrückt werden, d. h. sie rasten aus oder springen in den nächsten Gang über, wodurch sich keine ausreichend hohen Drehmomente übertragen lassen, um beispielsweise eine Stockschraube einschrauben zu können, bzw. eine Mutter zu kontern.

Die Aufgabe der vorliegenden Erfindung besteht darin, eine Schnellbefestigungsmutter in der Weise zu verbessern, daß höhere Drehmomente und damit größere Spannkräfte in der Schraubverbindung erreicht werden können.

Erfindungsgemäß wird die Aufgabe durch eine Schnellbefestigungsmutter der eingangs beschriebenen Art gelöst, bei welcher der Abstand zwischen der Wandung und dem Gewindeaußendurchmesser des Gewindeschaftes kleiner als die Materialstärke der Rastklinken ist.

Es hat sich gezeigt, daß durch diese Maßnahme die Knickstabilität der einzelnen Rastklinken erheblich gesteigert werden kann, so daß insgesamt höhere Anzugsmomente des Gewindeschaftes und damit größere Spannkräfte in der Schraubverbindung ermöglicht sind. Der Vorteil dieser Maßnahme liegt dabei darin, daß sie ohne Mehraufwand an Kosten Verbesserungen ermöglicht und ergänzend zu anderen Maßnahmen, wie z. B. Erhöhung der Anzahl von Rastklinken oder Verwendung eines steiferen Materials für die Rastklinken eingesetzt werden kann.

Bei einer bevorzugten Ausführungsform der Erfindung ist vorgesehen, daß die Rastklinken an wenigstens einem Tragteil aus Blech angeordnet sind, das im wesentlichen spielfrei in einem Muttergehäuse sitzt.

Diese Lösung bietet insbesondere fertigungstechnische Vorteile, denn die Verwendung eines Bleches als Einsatzelement in einem beispielsweise aus Metall oder eventuell Kunststoff bestehenden Muttergehäuse hat den Vorteil, daß das Blech über die notwendigen Festigkeitseigenschaften verfügen kann und sich die Rastklinken bei der Herstellung des Bleches dennoch leicht in der gewünschten Form ausstellen lassen. Auch die Verwendung mehrerer Tragteile aus Blech, die segmentartig ausgebildet sind, ist denkbar. Besonders einfach ist die Herstellung bei einer Schnellbefestigungsmutter, bei welcher wenigstens ein Tragteil in die Form des Muttergehäuses bei dessen Herstellung eingelegt wird, so daß das einteilige Tragteil oder die mehreren segmentartigen Tragteile in die Kunststoffmasse mit eingespritzt werden. Für höhere Anforderungen ist jedoch ein Muttergehäuse aus Metall zu bevorzugen, in welches das wenigstens eine Tragteil eingeschoben wird und beispielsweise formschlüssig gehalten ist.

Eine besonders bevorzugte Ausführungsform der Erfindung sieht vor, daß im Endabschnitt der Schnellbefestigungsmutter hinter den beweglichen Rastklinken wenigstens eine Gewindeklinke vorgesehen ist, die feststehend angeordnet ist.

Der Vorteil einer solchen Lösung ist, daß die Gewindeschäfte nur bis zu einem gewissen Punkt eingeschoben werden können und anschließend noch ein gewisser Drehwinkel erforderlich ist, um den Gewindeschaft in seine endgültige Anzugsstellung zu bringen. Der Gewindebolzen wird also durch eine relativ geringe Drehung in den starren Teil des Innengewindes der Mutter eingeschraubt und stabilisiert somit die Lage des Gewindebolzens in axialer Richtung.

Die feststehenden Gewindeklinken können beispielsweise in der Art ausgebildet sein, daß das Gehäuse eine Anstauchung oder Ausformung aufweist, die die Gewindeklinke am Ausweichen hindert. Bei einer solchen Lösung kann die Gewindeklinke wie die übrigen Rastklinken an dem wenigstens einen Tragteil ausgebildet sein, was einen besonders einfachen Aufbau der Schnellbefestigungsmutter ermöglicht.

Alternativ zu diesen wie die Rastklinken eher punktuell wirkenden Gewindeklinken kann auch ein ein- oder mehrgängiges Gewinde vorgesehen sein, beispielsweise in Form eines in dem Muttergehäuse sitzenden Gewindeeinsatzes, einer in dem Muttergehäuse sitzenden Feder oder in Form einer Gewindeblech-Scheibe, die in ihrer Mittenöffnung die Kontur eines Gewindeganges aufweist.

Nachfolgend wird anhand der beigefügten Zeichnungen näher auf Ausführungsbeispiele der Erfindung eingegangen. Es zeigen:
- Fig. 1: einen Längsschnitt einer Schnellbefestigungsmutter mit eingedrehtem Gewindeschaft;
- Fig. 2: einen Längsschnitt einer abgewandelten Ausführungsform einer Schnellbefestigungsmutter;
- Fig. 3: einen Längsschnitt einer weiteren Ausführungsform einer Schnellbefestigungsmutter;
- Fig. 4: einen Längsschnitt einer Schnellbefestigungsmutter mit einer separaten Gewindeblech-Scheibe;
- Fig. 5: einen Längsschnitt einer Schnellbefestigungsmutter mit separatem Gewindeeinsatz.

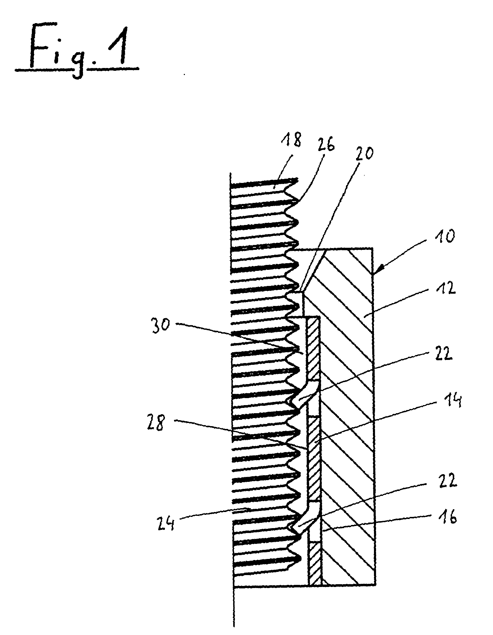

In Fig. 1 ist eine Schnellbefestigungsmutter 10 dargestellt, die im wesentlichen aus einem Muttergehäuse 12 und einem Tragteil 14 aus Blech besteht. Das Tragteil 14 sitzt drehstarr in einer seiner Außenkontur entsprechend ausgeformten Öffnung 16 in dem vorzugsweise aus kalt oder warm verformtem oder gegossenem, schweißbaren Stahl bestehenden Muttergehäuse 12, wobei das Tragteil 14 beispielsweise durch Einlegen oder Einschieben in das Muttergehäuses 12 hergestellt wird. Das Tragteil 14 kann hülsenähnlich zylindrisch ausgebildet sein, es ist aber auch denkbar, das Tragteil 14 mit polygonartigem Querschnitt auszubilden oder in mehrere über den Umfang verteilte Segmente zu unterteilen.

Beim Anziehen einer Schraubverbindung unter Verwendung der gezeigten Schnellbefestigungsmutter 10 wird zunächst ein Gewindeschaft 18 im Sinne der Darstellung von oben in eine Öffnung 20 in dem Muttergehäuse 12 eingedrückt, wobei an dem Tragteil 14 angeformte Rastklinken 22 elastisch federnd radial nach außen ausweichen und der Einschubbewegung des Gewindeschaftes 18 einen nur geringen Widerstand entgegensetzen. Am Ende des Befestigungsvorganges wird der Gewindeschaft 18 in üblicher Art und Weise gedreht, wobei die in einen Gewindegang 24 zurückschnappenden Rastklinken 22 sich gegen die schrägen Wandungen der Gewindegänge verkrallen und so den notwendigen Zugkraftaufbau in dem Gewindeschaft 18 ermöglichen.

Die Besonderheit der gezeigten Schnellbefestigungsmutter 10 besteht darin, daß der Abstand zwischen dem Gewindeaußendurchmesser, der durch die Spitze der Erhebungen 26 zwischen den Gewindegängen 24 definiert ist, und der Innenwandung 28 des Tragteiles 14 im Bereich der Rastklinken 22 kleiner als die Materialstärke der Rastklinken ist. Die geringe Breite des verbleibenden Spaltes 30 zwischen dem Gewindeschaft 18 und dem Tragteil 14 sorgt dabei in Verbindung mit einer bestimmten Materialstärke des das Tragteil 14 bildenden Bleches für eine besonders gute Knicksteifigkeit der Rastklinken, die verhindert, daß diese frühzeitig beim Erreichen vergleichweise geringer Anzugsmomente in den nächsten Gewindegang überspringen oder bleibend plastisch verformt werden. Damit sind Anzugsmomente und Spannkräfte in der Schraubverbindung möglich, die bislang nicht realisierbar waren, so daß beispielsweise auch eine Stockschraube mittels der Schnellbefestigungsmutter 10 eingeschraubt werden kann. Weitere Maßnahmen zum Erhöhen der Gewindekräfte sind eine Erhöhung der Anzahl der Rastklinken 22 oder auch die Verwendung eines anderen Materials für die Rastklinke 22, wobei allerdings bei diesen Maßnahmen auch die notwendigen Kräfte zum Einschieben des Gewindeschaftes 18 am Anfang des Befestigungsvorganges ansteigen, während die geringe Breite des Spaltes 30 eine Verbesserung der Anzugswerte ohne Erhöhung des Widerstandes beim Einschieben ermöglicht.

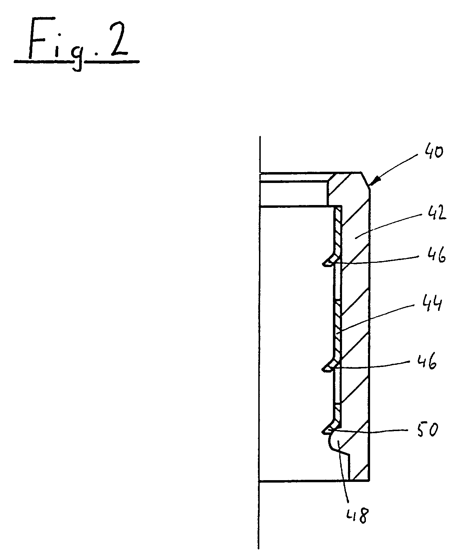

In Fig. 2 ist eine weitere Ausführungsform einer Schnellbefestigungsmutter 40 gezeigt, die wiederum aus einem Muttergehäuse 42 und einem innenseitig angeordneten Tragteil 44 mit den ausgestellten Rastklinken 46 besteht. Ein Unterschied zu der vorbeschriebenen Ausführungsform besteht darin, daß das Gehäuse eine Anstauchung 48 aufweist, die eine Gewindeklinke 50 am Ausweichen radial nach außen hindert. Im übrigen ist die Gewindeklinke 50 wie die Rastklinken 46 an dem Tragteil angeordnet und nach innen ausgestellt. Die Gewindeklinke 50 begrenzt den axialen Einschub des in Fig. 2 nicht dargestellten Gewindeschaftes, so daß dieser nur bis zu einem gewissen Punkt ohne Drehbewegung eingeschoben werden kann, bevor er durch Weiterdrehen in seine endgültige Lage unter Aufbau der Spannkräfte in der Schraubverbindung gebracht wird.

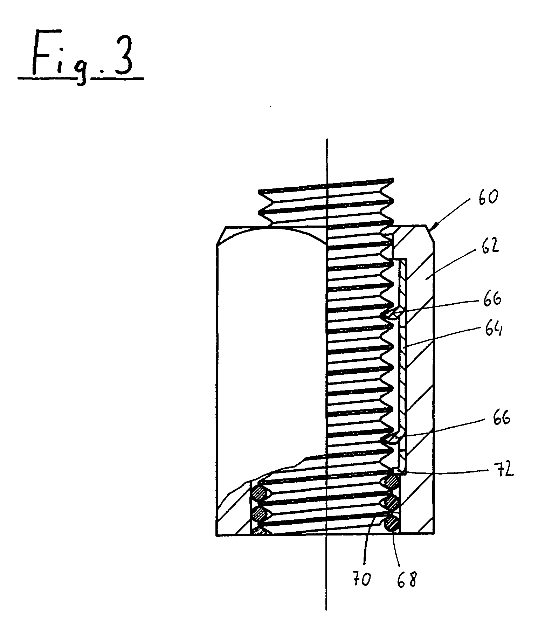

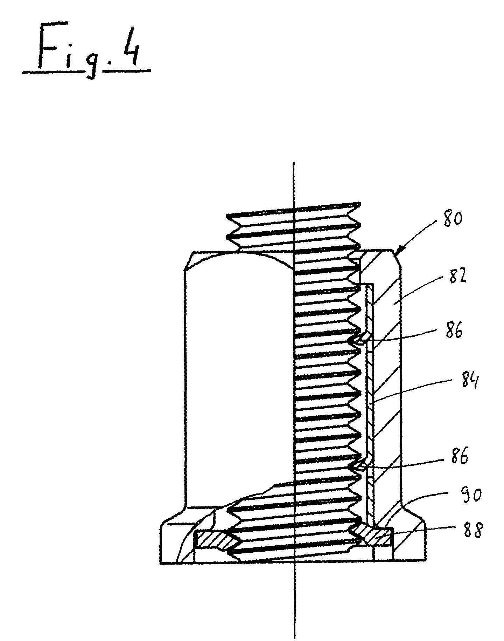

Weitere Möglichkeiten zur Realisierung eines feststehenden Gewindeabschnittes in Ergänzung zu den beweglichen Rastklinken sind in Fig. 3, 4 und 5 dargestellt. Bei einer in Fig. 3 dargestellten Ausführungsform einer Schnellbefestigungsmutter 60 mit einem Muttergehäuse 62 und einem Tragteil 64, an welchem die Rastklinken 66 angeordnet sind, ist hierzu ein Federelement 68 vorgesehen, das in einer Gehäusebohrung 70 sitzt und einen dem Gewinde entsprechenden Durchmesser aufweist. Das untere Ende des Tragteiles 64 kann beispielsweise eine Umbördelung 72 nach innen aufweisen, die einen axialen Halt für das Federelement 68 bildet.
Eine weitere Ausführungsform einer Schnellbefestigungsmutter 80 ist in Fig. 4 gezeigt, die wiederum im wesentlichen aus einem Muttergehäuse 82 und einem Tragteil 84 mit den elastisch nach innen ausgestellten Rastklinken 86 gebildet ist, wobei als feststehender Gewindegang eine Gewindeblech-Scheibe 88 vorgesehen ist, die an einem Gehäuseabsatz 90 abgestützt ist, um die notwendigen Zugkräfte ableiten zu können.

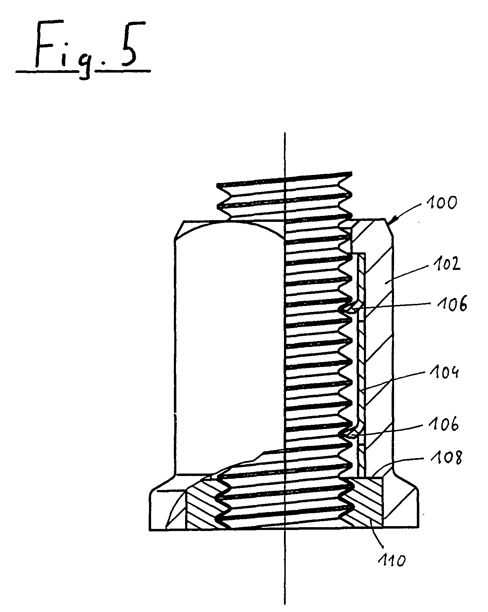

Denkbar ist es auch gemäß Fig. 5, die eine weitere Schnellbefestigungsmutter 100 mit einem Gehäuse 102 und einem Tragteil 104 besteht, einen Gewindeeinsatz 110 mit mehreren Gewindegängen an einem Gehäuseabsatz 108 abzustützen.

Vorteilhaft bei den gezeigten Varianten von Schnellbefestigungsmuttern 40, 60, 80, 100 mit bezüglich der jeweiligen Gehäuse in beiden Axialrichtungen festgelegten Gewindeteilen besteht darin, daß der Monteur beim Anziehen einen vertrauten Zuwachs des Anzugsmomentes spürt, was eine Hilfe beim Erreichen des gewünschten Drehmomentniveaus mit den korrekten Spannkräften erleichtert.

## Patentansprüche

1. Schnellbefestigungsmutter mit einer Öffnung (20) mit von einem Tragteil (14, 44, 64, 84, 104) ausgestellten Rastklinken (22; 46; 66; 86; 106), die beim Einschieben eines Gewindeschaftes (18) in die Öffnung (20) elastisch in einer Richtung von dem Gewinde weg ausweichen und sich bei entgegengesetzter Zugbelastung des Gewindeschaftes (18) gegen dessen Gewindegänge (24) verklemmen, **dadurch gekennzeichnet, daß** wenigstens im Bereich der Rastklinken (22; 46; 66; 86; 106) der Abstand zwischen der Wandung (28) und dem Gewindeaußendurchmesser des Gewindeschaftes (18) kleiner als die Materialstärke der Rastklinken (22; 46; 66; 86; 106) ist.

2. Schnellbefestigungsmutter nach Anspruch 1, **dadurch gekennzeichnet, daß** die Rastklinken (22; 46; 66; 86; 106) an wenigstens einem Tragteil (14; 44; 64; 84; 104) aus Blech angeordnet sind, das spielfrei in einem Muttergehäuse (12; 42; 62; 82; 102) sitzt.

3. Schnellbefestigungsmutter nach Anspruch 2, **dadurch gekennzeichnet, daß** das Muttergehäuse (12; 42; 62; 82; 102) aus Stahl besteht und das wenigstens eine Tragteil (14; 44; 64; 84; 104) in dem Muttergehäuse formschlüssig gehalten ist.

4. Schnellbefestigungsmutter nach Anspruch 2, **dadurch gekennzeichnet, daß** das Muttergehäuse aus Kunststoff besteht und das wenigstens eine Tragteil durch Einlegen in die Form des Muttergehäuses bei dessen Herstellung eingespritzt ist.

5. Schnellbefestigungsmutter nach einem der vorhergehenden Ansprüche, **dadurch gekennzeichnet, daß** mehrere Rastklinken (22; 16; 46; 66; 86; 106) in axialer Richtung und/oder in Umfangsrichtung vorgesehen sind.

6. Schnellbefestigungsmutter nach einem der vorhergehenden Ansprüche, **dadurch gekennzeichnet, daß** im Endabschnitt hinter der letzten Rastklinke wenigstens eine Gewindeklinke (50; 68; 88; 110) vorgesehen ist, die feststehend angeordnet ist.

7. Schnellbefestigungsmutter nach Anspruch 6, **dadurch gekennzeichnet, daß** das Gehäuse (42) eine Anstauchung (48) oder Ausformung aufweist, die die Gewindeklinke (50) am Ausweichen hindert.

8. Schnellbefestigungsmutter nach Anspruch 6, **dadurch gekennzeichnet, daß** die Gewindeklinke durch einen ein- oder mehrgängigen Gewindeeinsatz (110) gebildet ist, der in dem Muttergehäuse (102) sitzt.

9. Schnellbefestigungsmutter nach Anspruch 6, **dadurch gekennzeichnet, daß** die Gewindeklinke durch eine Feder (68) in dem Muttergehäuse (62) gebildet ist.

10. Schnellbefestigungsmutter nach Anspruch 6, **dadurch gekennzeichnet, daß** die Gewindeklinke durch eine Gewindeblech-Scheibe (88) in dem Muttergehäuse (82) gebildet ist.
